# EUROPEAN PATENT APPLICATION

(11) **EP 4 800 719 A2**
(43) Date of publication of application: **02.09.2026**
(21) Application number: 26161185.9
(22) Date of filing: 27.02.2026
(51) Int. Cl.: H01B 3/44, H01B 9/02, C08K 3/04, H01B 7/14, H01B 7/28

(54) **WET DESIGN HV CABLE**

(30) Priority: 28.02.2025 NO 20250230
(71) Applicant: Nexans, 92400 Courbevoie (FR)
(72) Inventor: Bengtsson, Karl Magnus, 0687 Oslo (NO); Olsen, Elise, 1782 Halden (NO)
(74) Representative: Acapo Onsagers AS

(57) **Abstract**

The present invention relates to wet design high voltage (HV) power cables comprising a cable core, which cable core comprises an electrical conductor being surrounded by an inner semiconductive layer, an insulation layer and optionally an outer semiconductive layer in that order. Further, the present invention relates to a method of manufacturing a wet design HV power cable. Moreover, the present invention relates to the use of the wet design HV power cable.

## Description

### FIELD OF THE INVENTION

The present invention relates to wet design high voltage (HV) power cables comprising a cable core, which comprises an electrical conductor being surrounded by an inner semiconductive layer, an insulation layer and optionally an outer semiconductive layer in that order. Further, the present invention relates to a method of manufacturing a wet design HV power cable. Moreover, the present invention relates to the use of the wet design HV power cable.

### BACKGROUND

A wet design power cable is a type of electrical cable that does not have an impervious water barrier around its insulation system. This design allows the cable to operate in environments where it may be exposed to water, such as underwater or in damp conditions. Unlike dry design cables, wet design cables lack a sheath representing a water seal, which means they do not have a complete barrier to water ingress.

These cables are commonly used in medium voltage (MV), including submarine cables for offshore wind farms and other underwater installations. As for the advantages, wet design cables can be more cost-effective due to the simpler construction without the need for a metallic water barrier. Further, they offer good flexibility and mechanical performance, making them suitable for dynamic applications.

However, wet design cables are associated with tremendous challenges in view of what can be designated as electrical durability: One of the main challenges in this regard is the potential for water treeing, a phenomenon where water ingress can lead to the formation of tree-like structures within the insulation, causing electrical degradation over time.

In the state of the art, there are considerable development activities related to improving the electrical durability of wet design cables which are not prone to water treeing. One such approach concerns the improvement of the material of the insulation layer. For instance, the WO 2023/198762 A1 uses specific polymer blends comprising a polyethylene-based copolymer with a further copolymer for such purposes.

Such an approach, however, is associated with a comprehensive process of manufacturing of the insulating material. Further, the accessibility of the materials is low. It is associated with a beneficial effect, if the material for the insulating layer is chosen from a commodity.

An object of the present invention is to provide a power cable constructed in wet design and capable of withstanding high voltages wherein the material of the cable core's isolation layer is composed of a commodity such that the availability is ensured. In particular, the power cable should be constructed such that it withstands voltages from 30 kV to 400 kV. Thus, an object of the present invention relates to a wet design HV power cable providing high electrical strength and durability.

The invention's underlying problems are solved by the subject-matter of claim 1. A first aspect of the invention therefore relates to a wet design HV power cable comprising a cable core, which cable core comprises an electrical conductor being surrounded by an inner semiconductive layer, an insulation layer and optionally an outer semiconductive layer in that order; wherein the inner semiconductive layer comprises acetylene black in a polymer matrix of the inner semiconductive layer; and the insulation layer comprises a polymer, wherein the polymer is a non-blended polymer consisting of an XLPE homopolymer, and wherein the polymer matrix of the inner semiconductive layer comprises a copolymer made of an olefin comonomer and a polar comonomer.

As for the term "wet design" power cable, the term is understood in the framework of this application as follows: A wet design power cable is a type of electrical cable that does not have an impervious water barrier around its insulation system. This design allows the cable to operate in environments where it may be exposed to water, such as underwater or in damp conditions. Unlike dry design cables, wet design cables lack a sheath representing a water seal, which means they do not have a complete barrier to water ingress.

As for the electrical insulation, an XLPE insulation layer is commonly used. The XLPE (Cross-Linked Polyethylene) isolator in power cables is a type of insulation material used to enhance the performance and durability of the cables. XLPE is made by chemically or physically cross-linking polyethylene molecules, creating a three-dimensional network that improves the material's thermal and mechanical properties. Such XLPE insulating materials represent a commodity. Their availability and processibility represent the benefits of the material. The XLPE material is usually formed of a linear polymer which is subjected to a cross-linking.

A cross-linked polyethylene (XLPE) is made through a process that chemically bonds the polymer chains in polyethylene, enhancing its properties. As for a simplified overview of how this is done, the process starts with high-density polyethylene (HDPE) or low-density polyethylene (LDPE) as a base material. During or after the extrusion of the polyethylene, cross-linking agents such as organic peroxides, silanes, or irradiation are introduced. These agents initiate the cross-linking reaction. The polyethylene is extruded into the desired shape, such as pipes or cables. The cross-linking agents cause the polymer chains to bond, forming a three-dimensional network. This can be done through: 1. Organic peroxides being mixed with polyethylene, and the mixture is heated to initiate the cross-linking reaction. 2. Silane compounds are grafted onto the polyethylene, and moisture is used to complete the cross-linking. 3.The polyethylene is exposed to high-energy radiation, which induces cross-linking. The material is subjected to a curing, often using heat and moisture, to complete the cross-linking process. This process results in a material that is more resistant to heat, chemicals, and stress, making it ideal for applications like electrical insulation, plumbing, and industrial piping.

Although, the cross-linking formally produces units within the polymer which distinguishes from the units resulting from the monomers used in the polymerization and forming the linear chain, i.e. not being involved in the cross-linking reaction, the XLPE is designated a homopolymer. Despite the designation of a cross-linked polymer as a homopolymer, the term "homopolymer" in the framework of the present application refers to a polymer which contains only a single type of repeating units.

According to the first aspect of the present invention, the insulation layer comprises a polymer being a non-blended polymer. A skilled person will understand that the insulation layer may comprise further constituents, whereupon as regards the polymeric phase, the insulation layer is non-blended. In other words, the feature "insulation layer comprises a polymer being a non-blended polymer" is understood such that the insulation layer comprises a polymeric phase not being a polymer blend, or consisting of one polymer only. A person skilled in the art will understand that the one polymer may have a polymer weight distribution such that still distinguishing polymer molecules are used in the insulation layer. The term "one polymer" can be understood as "one type of polymer" or "one kind of polymer". A non-blended polymer is a material which physical properties can be reduced to this kind of polymer. The polymer is preferably XLPE or an LDPE homopolymer. That means that in a preferred embodiment, the polymer is a non-blended polymer being an XLPE based on homopolymer LDPE. On the contrary, a "polymer blend" is understood as in materials science, i.e. a polymer blend is a member of a class of materials, in which at least two polymers are blended together to create a new material with different physical properties.

Thus, the first aspect of the invention relates to a wet design HV power cable comprising a cable core, which cable core comprises an electrical conductor being surrounded by an inner semiconductive layer, an insulation layer and optionally an outer semiconductive layer in that order; wherein the inner semiconductive layer comprises acetylene black in a polymer matrix of the inner semiconductive layer; and the insulation layer comprises a non-blended polymer or the insulation layer is devoid of a polymer blend.

These alternatives described in the foregoing paragraph represent different phrasings of the invention. Instead of providing a power cable having an insulating layer comprising a polymer which consists of the homopolymer, the insulating layer comprises a non-blended polymer, or as an alternative phrasing, the insulating layer is devoid of a polymer blend.

The use of a polymeric phase consisting of a homopolymer, in particular of XLPE, is associated with the beneficial effect of assured availability. Further features in combination with the homopolymer as the sole polymeric constituent of the polymeric phase assist enabling the use of power cables with such insulating layers as wet design power cables.

As a further required constituent, the cable core of the wet design HV power cable comprises an inner semiconductive layer surrounding the electrical conductor. In the present invention, "semiconducting layer" is understood to mean a layer, the electrical conductivity of which can be at least 1×10-9 S/m (Siemens per meter), preferably at least 1×10-3 S/m, and preferably can be less than 1×103 S/m (at 25° C.).

High voltage cables have an inner semiconductive layer as a conductor shield for the following beneficial effects. The semiconductive layer helps to improve the distribution of the electric field around the electrical conductor. This reduces the risk of electrical breakdown and enhances the overall performance of the power cable. Further, the electrical conductor's surface can have irregularities, which can lead to electric field concentration. The semiconductive layer smooths out these irregularities, ensuring a more uniform electric field. It helps to create an equipotential surface around the conductor, which means that the voltage is evenly distributed across the surface, reducing the risk of high voltage stress points that could lead to insulation failure.

In essence, the inner semiconductive layer is beneficial for ensuring the safe and efficient operation of power cables by managing the electric field and protecting the insulation.

According to the invention, the inner semiconductive layer comprises acetylene black in a polymer matrix of the inner semiconductive layer.

The inner semiconductive layer and its constituents and properties are of particular importance in the wet design HV power cable of the present invention. The electrical properties of the wet design HV power cable imparted by the characteristics of the insulating layer of the power cable, i.e. the characteristics of being a non-blended polymer constituting the insulating layer, have to be tuned such that it qualifies as a wet design HV power cable. While the use of a commodity material as an insulating layer alone does not improve the desired electrical properties sufficiently, further features influence the electrical properties such that the power cable may be constructed in wet design. Such a feature is represented by acetylene black in the inner semiconductive layer. By use of acetylene black, the electrical properties are improved such that the power cable despite using a commodity as material for the insulating layer qualifies for the wet design power cable technique. The above-mentioned functions of the inner semiconductive layer are improved by the use of acetylene black in the inner semiconductive layer.

In one aspect, the wet design HV power cable can be provided with an inner semiconductive layer, wherein the polymer matrix of the inner semiconductive layer comprises a copolymer made of an olefin comonomer and a polar comonomer, which polar comonomer is preferably selected from the group consisting of an alkyl acrylate, an alkyl methacrylate and vinyl acetate.

In a preferred aspect, the polymer matrix of the inner semiconductive layer comprises a low density ethylene-ethylacrylate, a low density ethylene-propylacrylate, a low density ethylene-butylacrylate or a low density ethylene-vinylacetate. In a more preferred aspect, the polymer matrix of the inner semiconductive layer comprises an ethylene-vinylacetate with a vinyl acetate content of 12% to 38%, even more preferred 18% to 33%, based on the weight of the total weight of the ethylene-vinylacetate.

The polymer matrix ensures the dispersion of the acetylene black and assists receiving a smooth surface. Therefore, the combination of features in view of the polymer matrix of the inner semiconductive layer, the acetylene black comprised by the inner semiconductive layer and the insulating layer comprising a polymer phase consisting of a homopolymer is beneficial in view of the invention's objects. Even more, the combination of features in view of the polymer matrix of the inner semiconductive layer, the acetylene black comprised by the inner semiconductive layer, the insulating layer comprising a polymer phase consisting of a homopolymer and the low concentration of monomeric organic constituents is beneficial in view of the invention's objects.

In one aspect, the acetylene black may have a BET surface area of 5 to 100 m²/g, preferably 10 to 90 m²/g, more preferred 20 to 80 m²/g.

The BET (Brunauer, Emmett and Teller) theory is commonly used to evaluate gas adsorption data and generate a specific surface area result. As for the method of measurement, a commercially available device is used.

Acetylene black with these characteristics provides the most beneficial properties to the power cable.

As for an alternative, furnace black may replace the acetylene black. However, the beneficial effects associated with the invention cannot be achieved. There are nevertheless beneficial effects in terms of the availability of the furnace black material. While it is crucial for the electrical properties that the inner semiconductive layer comprises acetylene black, the outer semiconductive layer may comprise furnace black.

As such, in one embodiment, the inner semiconductive layer comprises acetylene black, the insulating layer comprises a polymer phase consisting of a homopolymer, and the outer semiconductive layer comprises a furnace black. This wet design HV power cable may be operated up to voltages between 30 kV and 290 kV.

In one aspect, the amount of monomeric organic constituents is between 0.1 µg/kg of polymer to 10 mg/kg of polymer, preferably 0.001 mg/kg of polymer to 5 mg/kg of polymer, more preferred 0.1 mg/kg of polymer to 1 mg/kg of polymer.

It is well known in the state of the art that the degree of crystallinity of the polyethylene impacts the electrical properties. The higher the degree of crystallinity, the higher the tendency of detrimental electrical properties. The degree of crystallinity has also an effect on water treeing. In order to reduce the degree of crystallinity, specific polar substances are added which specific polar substances inhibit crystallization of polyethylene. The CA1154220A discloses the use of vinyl acetate for decreasing the crystallinity. The term "polar substance" is a monomolecular substance being polar, i.e. having an uneven distribution of electron density, resulting in regions of partial positive and negative charge, in the framework of the present application.

It has surprisingly been found that the purposive reduction of the total amount of polar organic constituents decreases the tendency of water treeing which could be an effect associated with the lower degree of crystallization of XLPE homopolymer. From this perspective, it is preferred, that the amount of monomeric organic constituents is zero, which might however practically be challenging to reach such a goal.

As described above, the inner semiconductive layer and its constituents and properties are of particular importance in the wet design HV power cable of the present invention. The electrical properties of the wet design HV power cable imparted by the characteristics of the insulating layer of the power cable, i.e. the characteristics of being a non-blended polymer constituting the insulating layer, have to be tuned such that it qualifies as a wet design HV power cable. While the use of commodity material as an insulating layer alone does not improve the desired electrical properties, further features influence the electrical properties such that the power cable may be constructed in wet design. Such a feature is represented by acetylene black in the inner semiconductive layer. By use of acetylene black, the electrical properties are improved such that the power cable despite using a commodity as material for the insulating layer qualifies for the wet design power cable technique. The above-mentioned functions of the inner semiconductive layer are improved by the use of acetylene black in the inner semiconductive layer. The improvement imparted by the inner semiconductive layer is similar to the improvement imparted by the feature regarding the total amount of polar organic constituents. In other words, the total amount of organic constituents plays a role in the provision of a power cable constructed in wet design although making use of commodity materials as insulating layers.

The decrease of the total amount of monomeric organic constituents can be achieved by increasing the purity of the monomeric constituents before polymerization.

As for the measurement of determination of the total amount of monomeric organic constituents is performed in that the insulation layer is subjected to a peeling method, wherein thin slices of the insulation material are subjected to an Infrared (IR) spectroscopy. From the process of manufacturing the insulation layer, it is known which monomeric organic constituents are expected to be in the material. The monomeric organic constituents stem from the starting materials of the polymerization, which gives the possibility to derive those substances to be expected in the product. Their amount can be measured with IR techniques.

In one aspect, the wet design HV power cable is devoid of a metal sheath layer. This feature represents a crucial feature which renders the power cable to be a "wet design" HV power cable.

In one aspect, the polymer of the insulation layer preferably consists of a homopolymer, preferably an XLPE homopolymer, more preferred an XLPE homopolymer being a cross-linked LDPE homopolymer an XLPE. It means that the polymer of the insulation layer consists of one homopolymer. XLPE is the best available commodity for use as insulating material. In an alternative to this aspect, the polymer of the insulation layer (4) preferably consists of a copolymer consisting of two or more non-polar comonomers. It is to be understood that the copolymer is devoid of a polar comonomer.

In the framework of the present application, the term "non-polar comonomer" is understood as a comonomer being devoid of a heteroatom; the term "polar comonomer" is understood as a comonomer comprising a heteroatom, preferably comprising a carboxylic group or comprising an oxygen atom.

In one aspect, the isolation layer has a thickness of 5 mm to 50 mm, preferably 8 mm to 40 mm, more preferred 12 mm to 35 mm, most preferred 15 mm to 30 mm.

Such thickness regimes enable the manufacturing of a power cable exhibiting a sufficient flexibility such that the power cable has enough ability of being bended, however, the power cable has a sufficient electrical durability.

In one aspect, the electrical conductor is a metal comprising Cu or Al.

The metal used for the electrical conductor of the wet design HV power cable is a commodity metal.

In one aspect, the wet design HV power cable is capable of operating at voltages from 30 kV to 400 kV, preferably from 50 kV to 300 kV, more preferred from 70 kV to 200 kV.

It is a beneficial effect associated with this invention that the operating voltage is high compared to conventional wet design HV power cables.

In one aspect, the power cable may comprise at least one of following: a metal armouring layer, an outer protective sheath layer, preferably an outer protective polymer sheath layer.

The further layers have beneficial effects in view of mechanical resistivity against impacts from outside the power cable towards the power cable.

In one aspect, the wet design HV power cable comprises at least three cable cores. According to a preferred aspect, the armouring layer surrounds the at least three cable cores, and the outer protective sheath layer surrounds the armouring layer.

This wet design HV power cable can be put into practice as an AC power cable.

In one aspect, the first semiconductive layer, the insulation layer and the second semiconductive layer may constitute a three-layer insulation. In other words, the insulation layer is in direct physical contact with the first semiconductive layer, and the second semiconductive layer is in direct physical contact with the insulation layer.

The inner and outer semiconductive layers are preferably made of a thermoset polymer material.

In one aspect, the inner semiconductive layer and the outer semiconductive layer are made of the same materials. As for the understanding of this aspect, the same material could mean that the raw materials used for the inner and outer semiconductive layers are identical, or it could mean that the raw materials and their respective content are identical in the inner and outer semiconductive layers. According to another aspect as disclosed above, the carbon black used in the inner and outer semiconductive layer may distinguish from one another.

The wet design HV power cable in accordance with the present invention can additionally comprise an electrically insulating sheath surrounding the second semiconducting layer, and which can be in direct physical contact with the latter. This sheath distinguishes from a metal sheath layer which protects from water ingress.

The final wet design HV power cable is usually an assembly comprising cable lengths connected together as well as connected accessories such as terminations, GIS terminations, asymmetric joints, HV or MV joints, MV terminations, MV plugin terminations, etc. The wet design HV power cable can easily be provided with a factory or a field/repair joint.

The invention's underlying problems are further solved by the subject-matter of claim 11. A second aspect of the invention therefore relates to a wet design HV power cable comprising a cable core, which cable core comprises an electrical conductor being surrounded by an inner semiconductive layer, an insulation layer and optionally an outer semiconductive layer in that order; wherein
- the inner semiconductive layer comprises acetylene black in a polymer matrix of the inner semiconductive layer; and
- the insulation layer comprises a polymer,
wherein the polymer is a polymer blend comprising at least a first polymer and a second polymer, wherein the first polymer consists of an XLPE homopolymer, preferably an XLPE homopolymer being a cross-linked LDPE homopolymer, and the second polymer consists of a copolymer being devoid of polar comonomers.

The second aspect represents an alternative to the first aspect of the invention. In the state of the art, the insulation layer of wet design cables is made of a polymer blend comprising a polyethylene together with a polar copolymer. According to the second aspect of the present invention, polyethylene is combined with a non-polar copolymer. The combination of the use of such a blend together with the inner semiconductive layer comprising acetylene black and together with the low amount of monomeric constituents is associated with beneficial effects, such that the invention's underlying object is solved.

In one aspect, the wet design HV power cable comprises an insulation layer being a polymer blend comprising at least a first polymer and a second polymer, wherein the first polymer consists of an XLPE homopolymer being a cross-linked LDPE homopolymer. According to a further aspect, the wet design HV power cable comprises an insulation layer, wherein the second copolymer is devoid of polar comonomers, wherein the polar comonomer preferably consists of a linear-low-density polyethylene (LLDPE), an ethylene-propylene rubber (EPR), an ethylene-propylene-dien rubber (EPDM).

The effect associated with the constituents of the inner semiconductive layer on the one hand and the insulation layer on the other hand relates to a compatibilization of these two layers and the compatibilization of the specific carbon black in the inner semiconductive layer. If the acetylene black is beneficially compatibilized in the polymer matrix of the inner semiconductive layer, the inner semiconductive layer is to be attached to the insulation layer such that the interface is as smooth as possible. The smoothness of the interface represents a property beneficially influencing the electrical properties of the power cable. The combination of materials improves the power cable to realize the beneficial effects.

In one aspect, the polymer matrix of the inner semiconductive layer comprises a low density ethylene-ethylacrylate, a low density ethylene-propylacrylate, a low density ethylene-butylacrylate or a low density ethlylene-vinylacetate.

The invention's underlying problems are further solved by the subject-matter of claim 15. A third aspect of the invention therefore relates to a method of manufacturing at least a part of a power cable comprising the steps of: providing an electrical conductor, surrounding an inner semiconductive layer, an insulation layer and optionally an outer semiconductive layer in that order radially around the electrical conductor, forming thereby a cable core; and optionally arranging at least one further layer radially around the cable core.

In one aspect, the method represents a method of manufacturing a wet design HV power cable in accordance with the invention.

The invention's underlying problems are further solved by the subject-matter of claim 15. A fourth aspect of the invention therefore relates to the use of a wet design HV power cable according to the invention for operating at voltages from 30 kV to 400 kV, preferably from 50 kV to 300 kV, more preferred from 70 kV to 200 kV.

The invention's underlying problems are further solved by fifth aspect of the invention which relates to a method of installing and/or operating the wet design HV power cable according to the first aspect, i.e. according to claim 1, or according to the second aspect, i.e. according to claim 14, in a subsea environment.

It has surprisingly been found that the wet design HV power cables can be used in the subsea environment although they are developed without the use of a distinct water barrier, especially without a metal sheath. The wet design HV power cables can be installed in subsea as known by a skilled person. It was surprisingly found that the wet design HV power cables according to the invention have sufficient durability in subsea environments. In one aspect, the wet design HV power cables according to the invention can be installed and/or operated in a depth of 300 m to 3,000 m, preferably 1,000 m to 2,500 m. In a further aspect, the wet design HV power cable according to the invention can be operated at voltages from 30 kV to 400 kV, preferably from 50 kV to 300 kV, more preferred from 70 kV to 200 kV.

Features being solely disclosed in connection with the wet design HV power cable of the invention are deemed to be disclosed in connection with the methods of the invention and the use of the invention and vice versa.

### BRIEF DESCRIPTION OF THE DRAWINGS

Certain aspects of the presently disclosed subject-matter will be described with reference to the accompanying drawings, which are representative and schematic in nature and are not to be considered to be limiting in any respect as it relates to the scope of the subject-matter disclosed herein:
Figure 1 depicts the principal set-up of the cable core;
Figure 2 depicts an example of a wet design HV power cable according to the invention.

### DESCRIPTION OF EMBODIMENTS

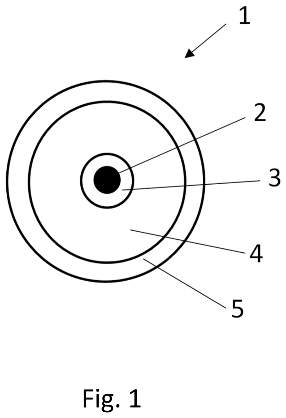

Fig. 1 shows the principal set-up of the cable core 1 having an electrical conductor 2 being surrounded by an inner semiconductive layer 3, an insulation layer 4 and, as not demanded by invention, an outer semiconductive layer 5 in that order.

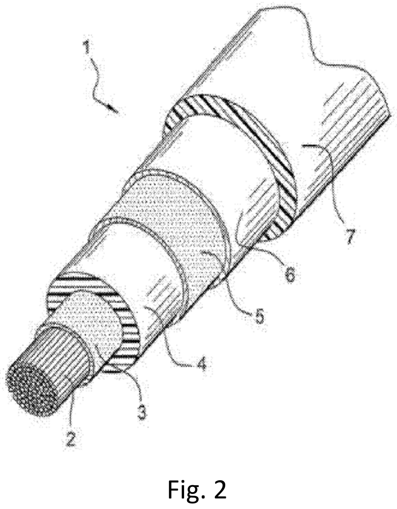

The medium- or high-voltage power cable, illustrated in Fig. 2, comprises a central conducting element 2, in particular made of copper or of aluminium, and successively and coaxially comprises, around this element, a first semiconducting layer 3 known as "internal semiconducting layer", an electrically insulating layer 4, a second semiconducting layer 5 known as "external semiconducting layer", a metal shield 6 (non-water proof) of the cylindrical tube type and an exterior protective sheath 7 for mechanical protection, the electrically insulating layer 4 being made of a homopolymer.

In an exemplary example of the first aspect as disclosed herein, a wet design HV power cable is disclosed herewith which comprising a cable core made of a metal, in particular copper or aluminum. The cable core comprises the metal as the electrical conductor which is surrounded by an inner semiconductive layer. The inner semiconductive layer comprises a polymer matrix in which acetylene black is embedded. The inner semiconductive layer is surrounded by an insulation layer and optionally an outer semiconductive layer. The layers have the order succeeding the mentioning. The insulation layer comprises a polymer, wherein the polymer is a non-blended polymer consisting of an XLPE homopolymer. It is crucial that the insulation layer of the wet design cable of this first aspect does not comprise a further polymer. The polymer matrix of the inner semiconductive layer comprises a copolymer made of an olefin comonomer and a polar comonomer. The insulation layer consisting of the XLPE homopolymer is essentially devoid of monomeric organic constituents. This can be achieved in that the cross-linking is performed without an additional cross-linker and/or in that the monomeric constituent for producing the XLPE homopolymer is very pure. The content of the monomeric organic constituent is between 0.001 mg/kg of polymer to 1 mg/kg of polymer. This feature is achieved by the above described measures.

In an exemplary example of the second aspect as disclosed herein, a wet design HV power cable comprising a cable core (1), which cable core (1) comprises an electrical conductor (2) being surrounded by an inner semiconductive layer (3), an insulation layer (4) and optionally an outer semiconductive layer (5) in that order; wherein
- the inner semiconductive layer comprises acetylene black in a polymer matrix of the inner semiconductive layer; and
- the insulation layer comprises a polymer blend comprising at least a first polymer and a second polymer, wherein the first polymer consists of an XLPE homopolymer being a cross-linked LDPE homopolymer, and the second polymer consists of a copolymer being devoid of polar comonomers. Thus the insulation layer is a polymer blend, wherein the blend does not comprise a copolymer comprising polar monomers like acrylates. The second copolymer wherein the second polymer is selected from the group consisting of a linear-low-density polyethylene (LLDPE), an ethylene-propylene rubber (EPR), an ethylene-propylene-dien rubber (EPDM).

The wet design cable according to the second aspect thus comprises an interface of a layer comprising acetylene black in a polymer matrix of the inner semiconductive layer comprising a low density ethylene-ethylacrylate, a low density ethylene-propylacrylate, a low density ethylene-butylacrylate or a low density ethlylene-vinylacetate and a layer being an insulation layer comprising a polymer blend comprising an XLPE and a copolymer being selected from the group consisting of a linear-low-density polyethylene (LLDPE), an ethylene-propylene rubber (EPR), an ethylene-propylene-dien rubber (EPDM)

The following items are disclosed herewith:
1. A wet design HV power cable comprising a cable core (1), which cable core (1) comprises an electrical conductor (2) being surrounded by an inner semiconductive layer (3), an insulation layer (4) and optionally an outer semiconductive layer (5) in that order; wherein
   - the inner semiconductive layer (3) comprises acetylene black in a polymer matrix of the inner semiconductive layer; and
   - the insulation layer (4) comprises a polymer,
   wherein the polymer is a non-blended polymer.
2. The wet design HV power cable according to item 1, wherein the polymer matrix of the inner semiconductive layer comprises a copolymer made of an olefin comonomer and a polar comonomer, which polar comonomer is preferably selected from the group consisting of an alkyl acrylate, an alkyl methacrylate and vinyl acetate.
3. The wet design HV power cable according to claim 2, wherein the polymer matrix of the inner semiconductive layer comprises a low density ethylene-ethylacrylate, a low density ethylene-propylacrylate, a low density ethylene-butylacrylate or a low density ethlylene-vinylacetate.
4. The wet design HV power cable according to claim 1, wherein the acetylene black has a BET surface area of 5 to 100 m²/g, preferably 10 to 90 m²/g, more preferred 20 to 80 m²/g.
5. The wet design HV power cable according to claim 1, wherein the amount of monomeric organic constituents is between 0.001 mg/kg of polymer to 10 mg/kg of polymer, preferably 0.01 mg/kg of polymer to 5 mg/kg of polymer, more preferred 0.1 mg/kg of polymer to 1 mg/kg of polymer.
6. The wet design HV power cable according to claim 1, wherein the wet design HV power cable is devoid of a metal sheath layer.
7. The wet design HV power cable according to claim 1, wherein the polymer of the insulation layer (4) consists of a homopolymer, preferably an XLPE homopolymer, more preferred an XLPE homopolymer being a cross-linked LDPE homopolymer.
8. The wet design HV power cable according to claims 1, wherein the polymer of the insulation layer (4) consists of a copolymer consisting of two or more non-polar comonomers.
9. The wet design HV power cable according to claim 1, wherein the isolation layer (4) has a thickness of 5 mm to 50 mm, preferably 8 mm to 40 mm, more preferred 12 mm to 35 mm, most preferred 15 mm to 30 mm.
10. The wet design HV power cable according to claim 1, wherein the wet design HV power cable is capable of operating at voltages from 30 kV to 400 kV, preferably from 50 kV to 300 kV, more preferred from 70 kV to 200 kV.
11. The wet design HV power cable according to claim 1, wherein the power cable (1) comprises at least one of following:
   - a metal armouring layer,
   - an outer protective sheath layer, preferably an outer protective polymer sheath layer.
12. The wet design HV power cable according to claims 1, wherein the inner semiconductive layer (3) and the outer semiconductive layer (5) are made of the same materials.
13. A wet design HV power cable comprising a cable core (1), which cable core (1) comprises an electrical conductor (2) being surrounded by an inner semiconductive layer (3), an insulation layer (4) and optionally an outer semiconductive layer (5) in that order; wherein
   - the inner semiconductive layer (3) comprises acetylene black in a polymer matrix of the inner semiconductive layer; and
   - the insulation layer (4) comprises a polymer blend comprising at least a first polymer and a second polymer, wherein the first polymer consists of an XLPE homopolymer, preferably an XLPE homopolymer being a cross-linked LDPE homopolymer, and the second polymer consists of a copolymer being devoid of polar comonomers.
14. A method of manufacturing at least a part of a power cable comprising the steps of:
   - providing an electrical conductor (2),
   - surrounding an inner semiconductive layer (3), an insulation layer (4) and optionally an outer semiconductive layer (5) in that order radially around the electrical conductor (3), forming thereby a cable core (1); and
   - optionally arranging at least one further layer radially around the cable core (1).
15. Use of a wet design HV power cable according to any one of items 1 to 11 for operating at voltages from 30 kV to 400 kV, preferably from 50 kV to 300 kV, more preferred from 70 kV to 200 kV.

### REFERENCE LIST

- 1: cable core
- 2: electrical conductor
- 3: inner semiconductive layer
- 4: insulation layer
- 5: outer semiconductive layer
- 6: metal shield (non-water proof)
- 7: exterior protective sheath (for mechanical protection)

## Claims

1. A wet design HV power cable comprising a cable core (1), which cable core (1) comprises an electrical conductor (2) being surrounded by an inner semiconductive layer (3), an insulation layer (4) and optionally an outer semiconductive layer (5) in that order; wherein
- the inner semiconductive layer (3) comprises acetylene black in a polymer matrix of the inner semiconductive layer; and
- the insulation layer (4) comprises a polymer,
wherein the polymer is a non-blended polymer consisting of an XLPE homopolymer, and
wherein the polymer matrix of the inner semiconductive layer comprises a copolymer made of an olefin comonomer and a polar comonomer.

2. The wet design HV power cable according to claim 1, wherein the polymer matrix of the inner semiconductive layer comprises a copolymer made of an olefin comonomer and a polar comonomer, which polar comonomer is selected from the group consisting of an alkyl acrylate, an alkyl methacrylate and vinyl acetate.

3. The wet design HV power cable according to claim 2, wherein the polymer matrix of the inner semiconductive layer comprises a low density ethylene-ethylacrylate, a low density ethylene-propylacrylate, a low density ethylene-butylacrylate or a low density ethlylene-vinylacetate.

4. The wet design HV power cable according to any one of claims 1 to 3, wherein the acetylene black has a BET surface area of 5 to 100 m²/g, preferably 10 to 90 m²/g, more preferred 20 to 80 m²/g.

5. The wet design HV power cable according to any one of claims 1 to 4, wherein the amount of monomeric organic constituents is between 0.001 mg/kg of polymer to 10 mg/kg of polymer, preferably 0.01 mg/kg of polymer to 5 mg/kg of polymer, more preferred 0.1 mg/kg of polymer to 1 mg/kg of polymer.

6. The wet design HV power cable according to any one of claims 1 to 5, wherein the wet design HV power cable is devoid of a metal sheath layer.

7. The wet design HV power cable according to any one of claims 1 to 6, wherein the polymer of the insulation layer (4) consists of an XLPE homopolymer being a cross-linked LDPE homopolymer.

8. The wet design HV power cable according to any one of claims 1 to 6, wherein the polymer of the insulation layer (4) consists of a copolymer consisting of two or more non-polar comonomers.

9. The wet design HV power cable according to any one of claims 1 to 9, wherein the power cable (1) comprises at least one of following:
- a metal armouring layer,
- an outer protective sheath layer, preferably an outer protective polymer sheath layer.

10. The wet design HV power cable according to any one of claims 1 to 10, wherein the inner semiconductive layer (3) and the outer semiconductive layer (5) are made of the same materials.

11. A wet design HV power cable comprising a cable core (1), which cable core (1) comprises an electrical conductor (2) being surrounded by an inner semiconductive layer (3), an insulation layer (4) and optionally an outer semiconductive layer (5) in that order; wherein
- the inner semiconductive layer (3) comprises acetylene black in a polymer matrix of the inner semiconductive layer; and
- the insulation layer (4) comprises a polymer blend comprising at least a first polymer and a second polymer, wherein the first polymer consists of an XLPE homopolymer, and the second polymer consists of a copolymer being devoid of polar comonomers.

12. The wet design HV power cable according to claim 11, wherein the first polymer consists of an XLPE homopolymer being a cross-linked LDPE homopolymer.

13. The wet design HV power cable according to claim 11 or claim 12, wherein copolymer being devoid of polar comonomers consists of a linear-low-density polyethylene (LLDPE), an ethylene-propylene rubber (EPR), an ethylene-propylene-dien rubber (EPDM).

14. The wet design HV power cable according to any one of claims 11 to 13, wherein the polymer matrix of the inner semiconductive layer comprises a low density ethylene-ethylacrylate, a low density ethylene-propylacrylate, a low density ethylene-butylacrylate or a low density ethlylene-vinylacetate.

15. A method of manufacturing at least a part of a power cable according to any one of claims 1 to 14 comprising the steps of:
- providing an electrical conductor (2),
- surrounding an inner semiconductive layer (3), an insulation layer (4) and optionally an outer semiconductive layer (5) in that order radially around the electrical conductor (3), forming thereby a cable core (1); and
- optionally arranging at least one further layer radially around the cable core (1).
